Europäisches Patentamt

European Patent Office

Office européen des brevets

(19)

(11) Veröffentlichungsnummer : **0 240 896**
**B1**

(12) **EUROPÄISCHE PATENTSCHRIFT**

(45) Veröffentlichungstag der Patentschrift : .
28.06.89

(21) Anmeldenummer : 87104711.4

(22) Anmeldetag : 31.03.87

(51) Int. Cl.⁴ : **B 60 S   1/38**

(54) Scheibenwischer mit offenen aerodynamischen Brückengliedern.

(30) Priorität : 09.04.86 FR 8605052

(43) Veröffentlichungstag der Anmeldung :
14.10.87 Patentblatt 87/42

(45) Bekanntmachung des Hinweises auf die Patenterteilung : 28.06.89 Patentblatt 89/26

(84) Benannte Vertragsstaaten :
DE ES FR GB IT

(56) Entgegenhaltungen :
EP--A-- 0 233 504
FR--A-- 2 476 569
FR--A-- 2 502 084
FR--E--    87 694

(73) Patentinhaber : PAUL JOURNEE S.A.
39, Avenue Marceau
F-92400 Courbevoie (FR)

(72) Erfinder : Duda, Jean
Grande Rue
F-60175 Villeneuve les Sablons (FR)
Erfinder : Journee, Maurice
Le Bois Hédouin Reilly
F-60240 Chaumont en Vexin (FR)

(74) Vertreter : Patentanwaltsbüro Cohausz & Florack
Postfach 14 01 20
D-4000 Düsseldorf 1 (DE)

EP 0 240 896 B1

## Beschreibung

Die Erfindung bezieht sich auf einen Scheibenwischer mit einer verformbaren, ein Wischblatt tragenden Konstruktion, die eine an einem Wischarm angelenkte große Brücke aufweist, an der mindestens eine Zwischenbrücke angelenkt ist, an der mindestens eine kleine Brücke angelenkt ist.

Bei einem solchen Scheibenwischer begrenzt die Frontfläche der verformbaren Konstruktion die Wischgeschwindigkeit und schafft zudem aerodynamische Erscheinungen, die zu einem Abheben des Wischers neigen, wodurch die Verwendung der Scheibenwischer bei hohen Fahrzeuggeschwindigkeiten eingeschränkt wird.

Aus der EP-A 0 233 504 die am 26-08-87 veröffentlicht worden ist und daher unter Art. 54 (3) EPÜ fällt, ist ein Scheibenwischer bekannt, dessen Brückenarme ein asymetrisches Profil haben, durch die aufgrund des Fahrtwindes der Wischer an die Fahrzeugscheibe angepresst wird.

Aufgabe der Erfindung ist es, einen Scheibenwischer zu schaffen, der eine Frontfläche aufweist, die dem Vorlauf des Scheibenwischers wenig Widerstand bietet und es darüber hinaus ermöglicht, den Anpreßdruck des Wischblattes an der zu wischenden Fläche zu verbessern.

Bei dem erfindungsgemäßen Scheibenwischer weisen die kleine Brücke und/oder die Zwischenbrücke zwei parallele Längsstäbe auf, die einem im wesentlichen tropfenförmigen Querschnitt haben und voneinander durch eine Lücke getrennt sind, in der ein Arm der die Brücke haltenden Brücke so einliegt, daß der Arm zumindest über einen Teil seiner Länge zu beiden Seiten durch die Längsstäbe verdeckt ist.

Besonders vorteilhaft ist es, wenn die kleinen Brücken und/oder die Zwischenbrücken aus Kunststoff geformt sind.

Die Erfindung wird verständlich beim Lesen der folgenden Beschreibung unter Bezugnahme auf die beigefheftete Zeichnung, in der

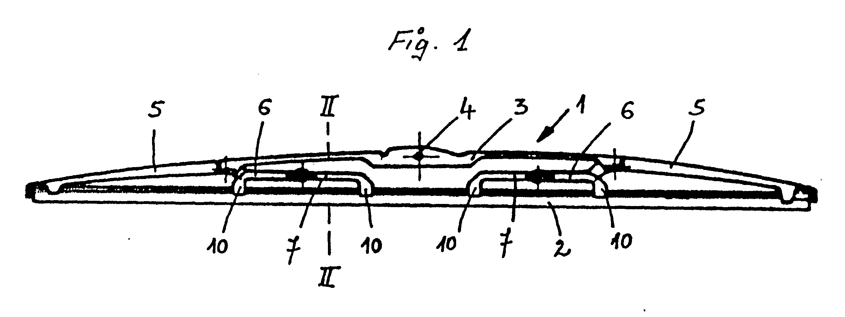

Figur 1 eine schematische Seitenansicht eines Scheibenwischers nach einem Ausführungsbeispiel der Erfindung ist und

Figur 2 eine Schnittansicht entlang der Linie II-II in Figur 1 in stark vergrößertem Maßstab darstellt.

Der Scheibenwischer umfaßt eine verformbare Konstruktion 1, die ein Wischblatt 2 trägt. Im dargestellten Beispiel wird die Konstruktion 1 gebildet aus einer großen Brücke 3, die ein Mittel zum Einhaken 4 an einen Wischarm (nicht dargestellt) trägt und an deren Enden Zwischenbrücken 5 angelenkt sind. Die Zwischenbrücken 5 tragen an ihrem äußeren Ende das Wischblatt 2, während ihr inneres Ende an eine kleine Brücke 6 angelenkt ist.

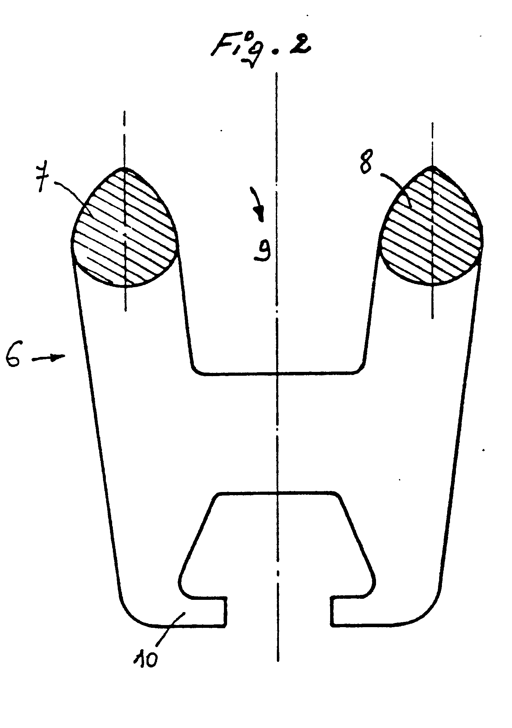

Der Querschnitt der kleinen Brücken 6 ist in großem Maßstab in Figur 2 gezeigt. Diese Brücken werden gebildet aus zwei Längsstäben 7 und 8 mit tropfenförmigem Querschnitt, die zwischen ihnen eine Lücke 9 lassen. Die Stäbe 7 und 8 sind an ihren Enden vereinigt und bilden dort Pratzen 10 zum Befestigen des Wischblatts 2.

Das tropfenförmige Profil der Stäbe 7 und 8 weist die durch die Bewegung des Wischers und die Fahrt des Fahrzeugs geschaffenen aerodynamischen Komponenten auf die zu wischende Fläche ab. Der auf diese Weise geschaffene Unterdruck erzeugt eine Strömung nach außen in der Lücke 9 zwischen den Stäben 7 und 8. Die kleinen Brücken 6 bieten auf diese Weise dem Vorlauf des Wischers einen sehr geringen Widerstand, wobei der Wischer zudem stark gegen die zu wischende Fläche gedrückt wird.

Die anderen Brücken 3 und 5 können eine gleiche Form haben. Vorteilhafterweise werden die Brücken aus Kunststoff geformt.

## Patentansprüche

1. Scheibenwischer mit einer verformbaren, ein Wischblatt (2) tragenden Konstruktion, die eine an einem Wischarm angelenkte große Brücke (3) aufweist, an der mindestens eine Zwischenbrücke (5) angelenkt ist, an der mindestens eine kleine Brücke (6) angelenkt ist, wobei die kleine Brücke (6) und/oder die Zwischenbrücke (5) zwei parallele Längsstäbe (7, 8) aufweisen, die einen im wesentlichen tropfenförmigen Querschnitt haben und voneinander durch eine Lücke (9) getrennt sind, in der ein Arm der die Brücke (5 oder 6) haltenden Brücke (3 oder 5) so einliegt, daß der Arm zumindest über einen Teil seiner Länge zu beiden Seiten durch die Längsstäbe (7, 8) verdeckt ist.

2. Scheibenwischer nach Anspruch 1, dadurch gekennzeichnet, daß die kleinen Brücken (6) und/oder die Zwischenbrücken (5) aus Kunststoff geformt sind.

## Claims

1. A windscreen wiper, which has a pliable structure carrying a wiper blade (2), and which comprises a large bridge (3) attached to a wiper arm, to which bridge at least one intermediate bridge (5), to which a small bridge (6) is coupled, is linked, and in which the small bridge (6) and/or the intermediate bridge (5) comprises two parallel longitudinal rods (7, 8) which have a substantially tear-drop shaped cross-section and are separated from one another by a gap (9) in which an arm of the bridge (3 or 5) which holds the bridge (5 or 6) is inserted in such a way that the arm is covered on both sides, over at least part of its length, by the longitudinal rods (7, 8).

2. A windscreen wiper according to Claim 1, characterized in that the small bridges (6) and/or the intermediate bridges (5) are made of plastic.

## Revendications

1. Balai d'essuie-glace constitué d'une structure déformable portant une raclette d'essuyage (2), ladite structure présentant un grand pont (3) articulé à un balai d'essuyage, au moins un pont intermédiaire (5) articulé audit grand pont et au moins un petit pont (6) articulé audit pont intermédiaire, caractérisé en ce que le petit pont (6) et/ou le pont intermédiaire (5) présentent deux tiges longitudinales parallèles (7, 8) qui ont une section transversale sensiblement en goutte d'eau et qui sont séparées l'une de l'autre par un vide (9), dans lequel un bras du pont (3 ou 5) portant le pont (5 ou 6) est disposé de manière à ce que le bras soit recouvert au moins sur une partie de sa longueur des deux côtés par les tiges longitudinales (7, 8).

2. Balai d'essuie-glace d'après la revendication 1, caractérisé en ce que les petits ponts (6) et/ou les ponts intermédiaires (5) sont moulés en matière plastique.

Fig. 1

Fig. 2